# EUROPEAN PATENT APPLICATION

(11) **EP 4 414 867 A1**
(43) Date of publication of application: **14.08.2024**
(21) Application number: 24157073.8
(22) Date of filing: 12.02.2024
(51) Int. Cl.: G06F 21/10, H04L 41/08

(54) **ROUTING POLICIES WITH ROUTING CONTROL FUNCTIONS (RCFS) HAVING HELPER FUNCTION SUPPORT AND STORAGE FOR ROUTE ATTRIBUTES**

(30) Priority: 10.02.2023 US 202363484424 P; 03.08.2023 US 202318365113
(71) Applicant: Arista Networks, Inc., Santa Clara, CA 95054 (US)
(72) Inventor: Cronin, David, Dublin (IE); Vafai, Keon M, Milpitas, CA (US); Birmiwal, Sharad, Burnaby (CA)
(74) Representative: Hoffmann Eitle

(57) **Abstract**

A routing control function (RCF) program tool includes syntax for invoking helper functions to facilitate manipulating route attributes in a routing policy. Helper functions include functions to manipulate the autonomous system (AS) path attribute. Storage strategies for storing the AS path are based on whether the AS path is in a read-only access mode in the routing policy or the AS path is in a read-write access mode. The AS path is stored in a space-efficient representation when the path is being accessed for reading. For read-write access, the AS path is stored in an access-efficient representation.

## Description

### CROSS REFERENCE TO RELATED APPLICATIONS

Pursuant to 35 U.S.C. §119(e), this application is entitled to and claims the benefit of the filing date of U.S. Provisional App. No. 63/484,424 filed February 10, 2023, the content of which is incorporated herein by reference in its entirety for all purposes.

The present disclosure relates to commonly owned U.S. App. No. 17/392,519, entitled "Efficient Runtime Evaluation Representation, External Construct Late-binding, and Updating Mechanisms For Routing Policies," filed August 3, 2021, the content of which is incorporated herein by reference in its entirety for all purposes.

The present disclosure relates to a commonly owned, concurrently filed patent application identified by Applicant's Ref. No. 23028-NP-001, entitled "Routing Policies with Routing Control Functions (RCFs) Having Function Arguments," the content of which is incorporated herein by reference in its entirety for all purposes.

### BACKGROUND

Internet service providers (ISPs) provide interconnectivity between autonomous systems. An ISP is itself an autonomous system. An ISP typically comprises a core network to which other autonomous systems connect via provider edge devices. The core network comprises network devices that interconnect the provider edge devices allowing the exchange of data between autonomous systems.

BGP (Border Gateway Protocol) is a known and well understood protocol that is used by the edge devices of an ISP to exchange routing and reachability information (BGP routes) with other edge devices (BGP neighbors) on other autonomous systems.

The BGP autonomous system path (AS path) is an attribute that is included in BGP routes that are exchanged between BGP neighbors. The AS path is a string of AS numbers. When a BGP device in one autonomous system advertises an update to a BGP neighbor in another autonomous system, it adds its corresponding AS number to the front of the AS path. Consequently, the AS path lists all the autonomous systems that need to be traversed to reach the location where the prefix that the path is attached to is advertised from.

Routing policies in a network device (e.g., switch, router, etc.) can specify which routes (e.g., BGP routes) are programmed into its routing tables and how routes are advertised. Users can create routing policies using route maps which comprise route map commands to do things like permit or deny routes, modify routes, and perform conditional actions. Routing Control Functions (RCF) is a route map technology that is developed and sold/licensed by Arista Networks, Inc. of Santa Clara, California, and is described in commonly owned U.S. App. No. 17/392,519, entitled "Efficient Runtime Evaluation Representation, External Construct Late-binding, and Updating Mechanisms For Routing Policies," the content of which is incorporated herein by reference in its entirety for all purposes.

RCF is a programming tool that allows the user to define functions (referred to as policy functions) to programmatically evaluate routes. Users (e.g., network or system administrators) can write policy functions that express and evaluate policies such as route filtering and attribute modification in a programmatic fashion to facilitate processing of routes. Redundant multi-line policy directives in the routing policy, for example, can be defined as discrete policy functions to improve readability, support, and maintenance.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 is a simplified configuration of networks within which embodiments of the present disclosure operated.
FIG. 2 is a block diagram of a network device in accordance with the present disclosure.
FIG. 3 illustrates details of a network device for routing control functions in accordance with the present disclosure.
FIG. 4 shows examples of a routing policy in accordance with the present disclosure.
FIGs. 5 and 6 illustrate processing in accordance with the present disclosure.
FIGs. 7A and 7B illustrate AS paths.
FIG. 8 shows an example of a first representation of an AS path in accordance with some embodiments.
FIG. 9 shows an example of copying between first and second representations of an AS path in accordance with some embodiments.
FIG. 10 illustrates details of copying an AS path from a second representation to a first representation in accordance with some embodiments.

### DETAILED DESCRIPTION

The present disclosure is generally directed to routing policies that are supported by a programmatic routing control language such as RCF (routing control function). RCF allows a network administrator to write code to process (evaluate/manipulate) a network route. An aspect of the present disclosure is directed to extending RCF to provide helper functions (methods) for manipulating routing attributes, and in particular being able to define a helper function in connection with an attribute and to invoke the helper function. The helper function alleviates the need for the network administrator from having to write code to process attributes of a network route; e.g., the AS (autonomous system) path attribute in a BGP route. Helper functions allow the vendor to define reusable code to process an attribute. Helper functions can avoid having the customer to develop code to process an attribute, and can prevent duplicating the effort of developing and writing code to perform commonly used operations used by different admins in a data center.

Another aspect of the present disclosure is directed to manipulating AS paths in RCF functions. An AS path can be manipulated, for example, by replacing one or more AS numbers in the AS path. The replacing operation can be based on segment types of the AS numbers, ranges of AS numbers, and so on. AS path manipulation can include removing AS numbers from the path. An AS path can be normalized to a desired length, and so on.

Another aspect of the present disclosure is directed to switching between a space-efficient storage format and an access-efficient storage format for storing an AS path. The AS path can be stored in a space-efficient format when the path is not being modified and is only being read. When the AS path is subject to construction and modification, e.g., RCF evaluation, the path can be stored in an access-efficient format. The AS path can be moved from space-efficient storage to access-efficient storage before operating on the AS path, and then back to space-efficient storage after operating on the AS path.

In the following description, for purposes of explanation, numerous examples and specific details are set forth in order to provide a thorough understanding of embodiments of the present disclosure. Particular embodiments as expressed in the claims may include some or all of the features in these examples, alone or in combination with other features described below, and may further include modifications and equivalents of the features and concepts described herein.

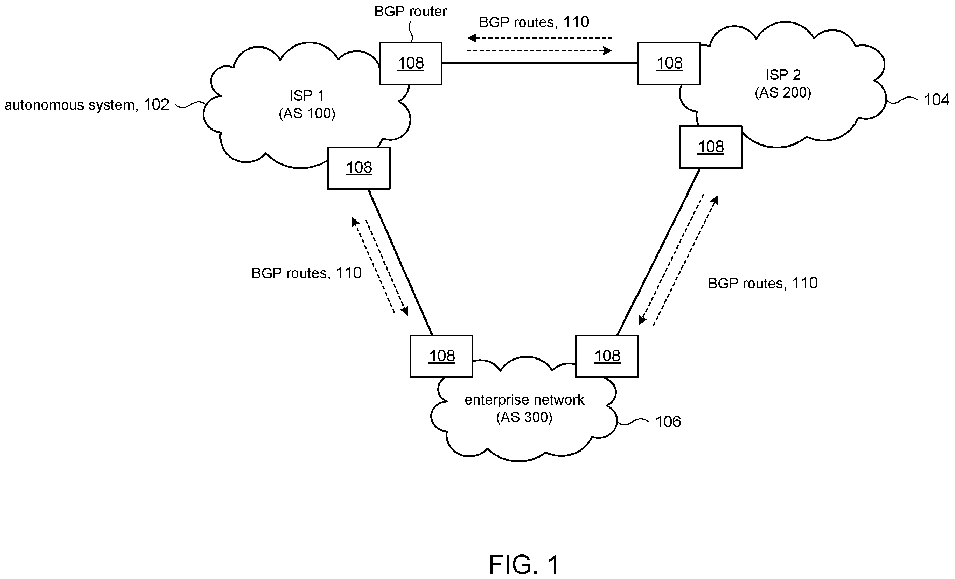

FIG. 1 shows a simplified configuration of networks to illustrate the exchange of information between autonomous systems to allow users within an autonomous system to exchange data with users in other autonomous systems. The figure shows three autonomous systems 102, 104, 106. Merely to illustrate, autonomous systems 102, 104 can be Internet service providers (ISPs), and autonomous system 106 can be an enterprise network. Each autonomous system is identified with an AS number.

The BGP protocol will be used herein to illustrate examples. It will be understood by persons of ordinary skill in the art, however, that embodiments in accordance with the present disclosure are applicable to other protocols such as OSPF (Open Shortest Path First), IS-IS (Intermediate System-to-Intermediate System), and the like.

In terms of BGP, pairs of autonomous systems are connected together by network edge devices 108 referred to as BGP routers. Autonomous systems can exchange information about each other's reachable networks by advertising BGP routes 110 between the BGP routers. As illustrated in FIG. 1, for example, ISP 1 can expose information about its reachable networks to ISP 2 by advertising BGP routes 110 to ISP 2 and, vice versa, ISP 2 can expose information about its reachable networks to ISP 1 by advertising BGP routes 110 to ISP 1; likewise with the enterprise network.

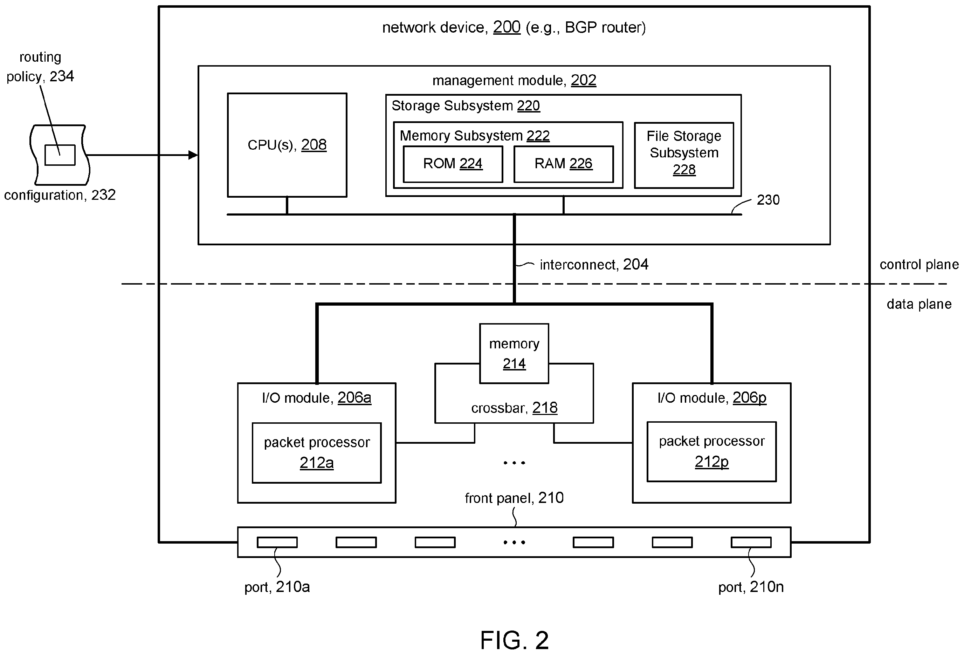

FIG. 2 is a schematic representation of a network device 200 (e.g., BGP router) that can be adapted in accordance with the present disclosure. In some embodiments, for example, network device 200 can include a management module 202, one or more I/O modules 206a - 206p, and a front panel 210 of I/O ports (physical interfaces, I/Fs) 210a - 210n. Management module 202 can constitute the control plane (also referred to as a control layer or simply the CPU) of network device 200 and can include one or more management CPUs 208 for managing and controlling operation of network device 200 in accordance with the present disclosure. Each management CPU 208 can be a general-purpose processor, such as an Intel^{®}/AMD^{®} x86, ARM^{®} microprocessor and the like, that operates under the control of software stored in a memory device/chips such as ROM (read-only memory) 224 or RAM (random-access memory) 226. The control plane provides services that include traffic management functions such as routing, security, load balancing, analysis, and the like.

The one or more management CPUs 208 can communicate with storage subsystem 220 via bus subsystem 230. Other subsystems, such as a network interface subsystem (not shown in FIG. 2), may be on bus subsystem 230. Storage subsystem 220 can include memory subsystem 222 and file/disk storage subsystem 228. Memory subsystem 222 and file/disk storage subsystem 228 represent examples of non-transitory computer-readable storage devices that can store program code and/or data, which when executed by one or more management CPUs 208, can cause one or more management CPUs 208 to perform operations in accordance with embodiments of the present disclosure.

Memory subsystem 222 can include a number of memories such as main RAM 226 (e.g., static RAM, dynamic RAM, etc.) for storage of instructions and data during program execution, and ROM (read-only memory) 224 on which fixed instructions and data can be stored. File storage subsystem 228 can provide persistent (i.e., non-volatile) storage for program and data files, and can include storage technologies such as solid-state drive and/or other types of storage media known in the art.

Management CPUs 208 can run a network operating system stored in storage subsystem 220. A network operating system is a specialized operating system for network device 200. For example, the network operating system can be the Arista EOS^{®} operating system, which is a fully programmable and highly modular, Linux-based network operating system, developed and sold/licensed by Arista Networks, Inc. of Santa Clara, California. Other network operating systems may be used.

Bus subsystem 230 can provide a mechanism for the various components and subsystems of management module 202 to communicate with each other as intended. Although bus subsystem 230 is shown schematically as a single bus, alternative embodiments of the bus subsystem can utilize multiple buses.

The one or more I/O modules 206a - 206p can be collectively referred to as the data plane of network device 200 (also referred to as data layer, forwarding plane, etc.). Interconnect 204 represents interconnections between modules in the control plane and modules in the data plane. Interconnect 204 can be a PCIe (Peripheral Component Interconnect Express) bus or any other suitable bus architecture (e.g., SMBus (System Management Bus), I²C (Inter-Integrated Circuit), etc.). I/O modules 206a - 206p can include respective packet processing hardware comprising packet processors 212a - 212p and memory hardware 214, to provide packet processing and forwarding capability. Each I/O module 206a - 206p can be further configured to communicate over one or more ports 210a - 210n on the front panel 210 to receive and forward network traffic. Packet processors 212a - 212p can comprise hardware (circuitry), including for example, data processing hardware such as an ASIC (application specific integrated circuit), FPGA (field programmable array), processing unit, and the like, and forwarding lookup hardware, including for example, content addressable memory such as TCAMs (ternary CAMs) and auxiliary memory such as SRAMs (static RAM). Memory hardware 214 can include the buffers used for queueing packets. I/O modules 206a - 206p can access memory hardware 214 via crossbar 218. It is noted that in other embodiments, the memory hardware 214 can be incorporated into each I/O module. The forwarding hardware in conjunction with the lookup hardware can provide wire speed decisions on how to process ingress packets and outgoing packets for egress. In accordance with some embodiments, some aspects of the present disclosure can be performed wholly within the data plane.

Configuration 232 can be provided to network device 200 to configure various aspects of the network device; e.g., which users can log into the device, DNS (directory name server) configuration, protocol configuration, hardware configuration, and so on. In some embodiments, configuration 232 can include routing policy 234 which represents an organization's policy for how routes are to be treated in the organization within which the network device is deployed; e.g., determine egress interface, VLAN tag manipulation, VxLAN encapsulation, etc.

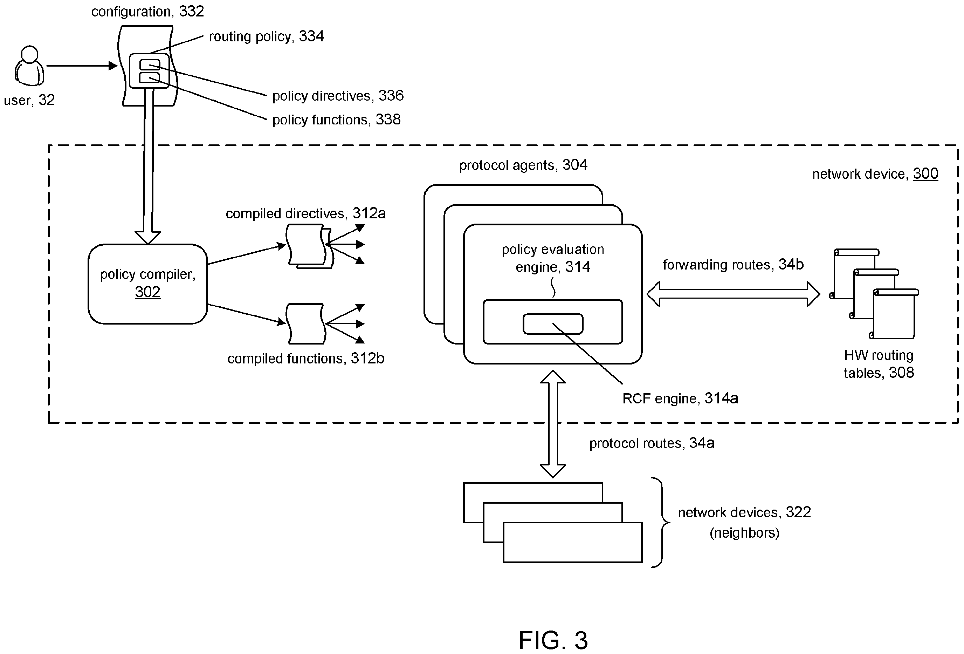

FIG. 3 is a generalized schematic representation of a workflow in a network device for processing routes in accordance with the present disclosure. In some embodiments, for example, network device 300 can include policy compiler 302 to process a routing policy. For discussion purposes, routing policies will be described in terms of the RCF language. Routing policy 334 can be contained in configuration file 332 which, for example, can be provided by a user 32, a centralized network controller, etc. Policy compiler 302 can include one or more components to compile or otherwise translate the user-readable text that constitutes routing policy 334. A policy compiler in accordance with some embodiments is disclosed in commonly owned U.S. App. No. 17/392,519, entitled "Efficient Runtime Evaluation Representation, External Construct Late-binding, and Updating Mechanisms For Routing Policies," which is incorporated herein by reference for all purposes. Routing policy 334 can include policy directives 336 and policy functions 338, as shown for example in FIG. 3. In some embodiments, policy compiler 302 can include a translator to produce a suitable internal representation of policy directives 336 which is generically represented in FIG. 3 as compiled directives 312a.

In accordance with some embodiments, policy functions 338 can be written in the RCF language. Users (e.g., network or system administrators) can write policy functions that express and evaluate policies such as route filtering and attribute modification in a programmatic fashion to facilitate processing of routes. Policy compiler 302 can include a compiler to produce a suitable internal representation of policy functions 338, represented in FIG. 3 as compiled functions 312b.

Network device 300 can include protocol agents 304 (e.g., spanning tree protocol, address resolution protocol, border gateway protocol, etc.) that communicate with other network devices (neighbors, peers, etc.) 322 to exchange (import and export) protocol routes 34a. Protocol agents 304 can use the various compiled directives 312a and compiled functions 312b to evaluate received protocol routes 34a in accordance with the routing policy 334 and output forwarding routes 34b to be stored in (imported) or read out from (exported) hardware routing tables 308 of the network device 300. In some embodiments, hardware routing tables 308 can comprise TCAMs, SRAMs, etc.

Each policy agent 304 can include a policy evaluation engine 314. During processing of a received route 34a, the policy evaluation engine 314 can use one or more of the compiled directives 312a and compiled functions 312b to determine how to program (import) the received route or advertise (export) the route. Policy evaluation engine 314 can create or otherwise represent an execution environment within which to execute the compiled directives and compiled functions.

In accordance with some embodiments, for example, the policy evaluation engine 314 can include an RCF engine 314a that creates or otherwise represents an RCF execution environment for executing compiled functions 312b (e.g., evaluation trees). The nature of the RCF execution environment depends on the nature of the particular implementation of RCF. In some embodiments, for example, RCF can be an interpreted language, not unlike the BASIC programming language, and RCF engine 314a can be an interpreter that interprets human-readable RCF policy functions directly without compiling the functions. In some embodiments, RCF can be a partially compiled language. For example, policy functions can be compiled into an intermediate representation (e.g., bytecode) and RCF engine 314a can be an interpreter that interprets the intermediate representation. In some embodiments, the internal representation can be expressed as an evaluation tree, such as disclosed in commonly owned U.S. App. No. 17/392,519. In other embodiments, RCF can be compiled into binary code and RCF engine 314a can be a virtual machine that executes the binary code.

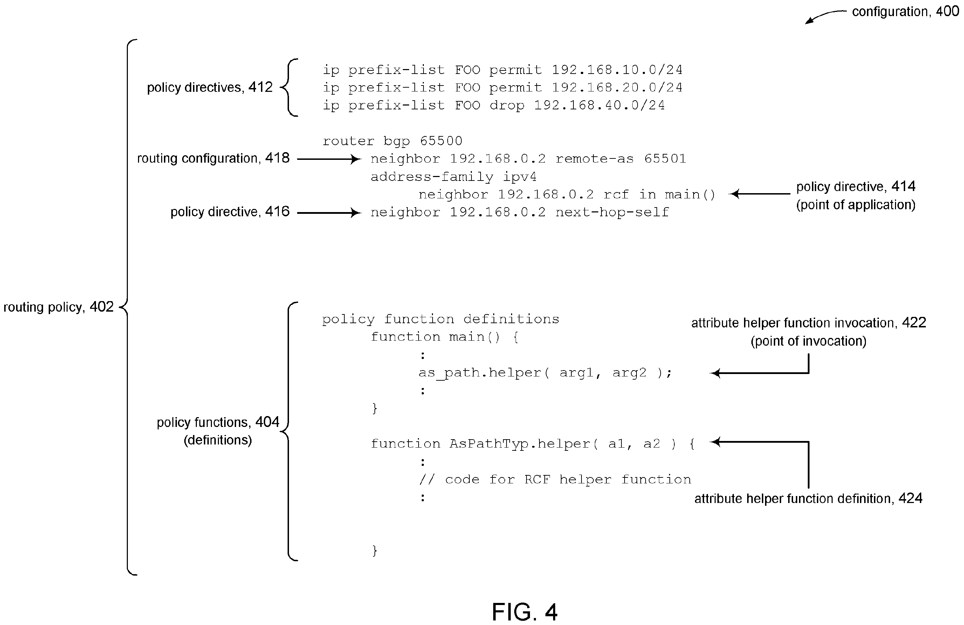

FIG. 4 shows a portion of a configuration 400 that contains a simplified example of a routing policy 402. The routing policy can comprise one or more policy directives (e.g., 412, 414, 416), routing configurations (e.g., 418), and the like. As can be seen in FIG. 4, the policy directive 414 invokes a policy function called MAIN(). A policy directive (e.g., 414) that invokes a policy function can be referred to as the "point of application" of the policy function. When policy function MAIN() is encountered at the point of application 414 during execution (evaluation) of routing policy 402, the policy function is invoked and processing of the routing policy continues within the policy function. When execution of MAIN() completes, processing can continue from the point in the routing policy following the point of application 414, which in the example in FIG. 4 is policy directive 416.

Routing policy 402 can include a policy function definition section 404 comprising definitions of policy functions, for example, policy function MAIN(). In accordance with the present disclosure, policy functions can include attribute "helper" functions to process route attributes. Routes in accordance with BGP (BGP routes) will be used as illustrative examples. As explained above, edge devices (e.g., BGP router) in different autonomous systems share reachability information with each other by exchanging BGP routes. A BGP route specifies a subnet within the autonomous system and reachability information about how to reach the subnet. A subnet can be expressed in prefix notation (e.g., 192.0.0.0/24), which is also referred to as CIDR (Classless Inter-Domain Routing) notation and slash notation. The reachability information includes attributes (BGP route attributes) pertaining to the prefix such as: AS path attribute, community list attribute, extended community set attribute, and the like. For discussion purposes, the present disclosure will use the AS path attribute, without loss of generality, to explain various aspects of helper functions in accordance with the present disclosure. FIG. 4, for instance, illustrates an invocation 422 of a helper function called HELPER for a route attribute (e.g., the AS path attribute), and the function definition 424 for the helper function.

Because route attributes can have a complex structure, an attribute helper function ("helper function") can avoid a network administrator having to write and support code to process such attributes. Helper functions are policy functions, like any other policy function, written, for example, in RCF. A function is a helper function by virtue of being invoked for the purpose of processing a route attribute. Processing can include modifying/manipulating the attribute, reading the attribute and performing actions (e.g., set metadata values) based on the attribute content, and the like. The example in FIG. 4 shows a helper function "foo" invoked from the function "main()". However, it will be appreciated that helper functions can be invoked from within any policy function.

In accordance with the present disclosure, RCF can include syntax to call or otherwise invoke a helper function to process a route attribute. In some embodiments, as shown in FIG. 4, the RCF syntax can be a dot operator to invoke the helper function on an attribute. The syntax can be:

```
                         attribute.helper( [arg ...] );
```

where
attribute is the instance of the route attribute of interest,
helper is the helper function, and
arg is an optional argument(s) that can be passed to the helper function. Depending on the attribute, the helper function may not require any arguments, or may require one or more arguments.

In some embodiments, the RCF syntax can use arrow notation:

```
                        attribute->helper( [arg1 ...] );
```

In other embodiments, a function-call syntax can be used:

```
                    helper_attrType ( attribute [, arg ...] );
```

where
helper_attrType is the helper function for this type of route attribute,
attribute is the instance of the route attribute of interest, and
arg is an optional argument(s) that can be passed to the helper function.

In accordance with some embodiments, the route attribute can be a predefined global variable or a user-defined local variable. A predefined global variable is "global" in that the variable is available to all policy functions. The variable is "predefined" in that it is known to the policy compiler at compile time; the user does not have to declare the variable before using it. When a BGP route is received, e.g., from a neighbor device, and processed by the routing policy for import, attributes associated with the route are stored into predefined global variables. For instance, as_path is an example of a predefined global variable, into which the AS path attribute in a received route can be stored. The global variable can be processed by a helper function to process the AS path, for example:

```
                       as_path.replace ( {1, 2, 3}, 10 );
```

where
as_path is the predefined global variable,
replace is the helper function, and
" (1, 2, 3)" and "10" are arguments passed to the helper function.

A user-defined local variable, on the other hand, is not globally available to all policy functions, but is available only to the function within which the variable is defined. Following is an example of invoking a user-defined local variable:

```
             local_path = as_path; // assignment
             local_path.replace ( {1, 2, 3}, 10 );
```

where
variable is the user-defined local variable, and
as_path is a predefined global variable.
The assignment statement sets the local variable local_path to the global variable as_path, so that invocation of the helper function will operate on the AS path that is stored in the local variable rather than the global variable.

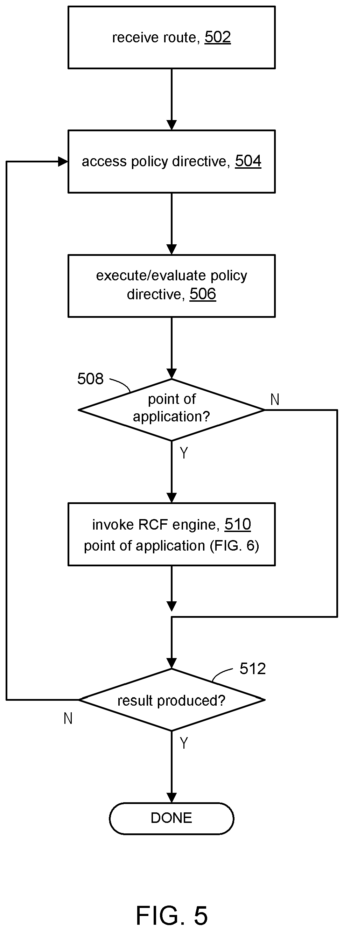

Referring to FIG. 5, the discussion will now turn to a high-level description of processing in a network device (e.g., 200, FIG. 2) for processing routes for import or export in accordance with the present disclosure. Depending on implementation, the processing may be performed entirely in the control plane or entirely in the data plane, or the processing may be divided between the control plane and the data plane. In some embodiments, for example, the network device can include one or more processing units (circuits), which when operated, can cause the network device to perform processing in accordance with FIG. 5. Processing units (circuits) in the control plane can include general CPUs that operate by way of executing computer program code stored on a non-volatile computer readable storage medium (e.g., read-only memory); for example, CPU 208 in the control plane (FIG. 2) can be a general CPU. Processing units (circuits) in the data plane can include specialized processors such as digital signal processors, field programmable gate arrays, application specific integrated circuits, and the like, that operate by way of executing computer program code or by way of logic circuits being configured for specific operations. For example, each of packet processors 212a - 212p in the data plane (FIG. 2) can be a specialized processor. The operation and processing blocks described below are not necessarily executed in the order shown. Operations can be combined or broken out into smaller operations in various embodiments. Operations can be allocated for execution among one or more concurrently executing processes and/or threads.

At operation 502, a policy engine (e.g., policy engine 314) executing on the network device can receive a route to be processed. The route can be from a neighbor device (BGP route) for import into the HW routing tables (e.g., 308) or from a HW routing table for export to BGP neighbors. A routing policy (e.g., 402) can be applied to the received route to assess and determine an action for the route.

At operation 504, the policy engine can access a policy directive from the routing policy.

At operation 506, the policy engine can execute or otherwise evaluate the policy directive.

At decision point 508, if the policy directive is a point of application (e.g., 414), then processing can proceed to operation 510 to process the policy function specified at the point of application. If the policy directive is not a point of application, then processing can proceed to decision point 512.

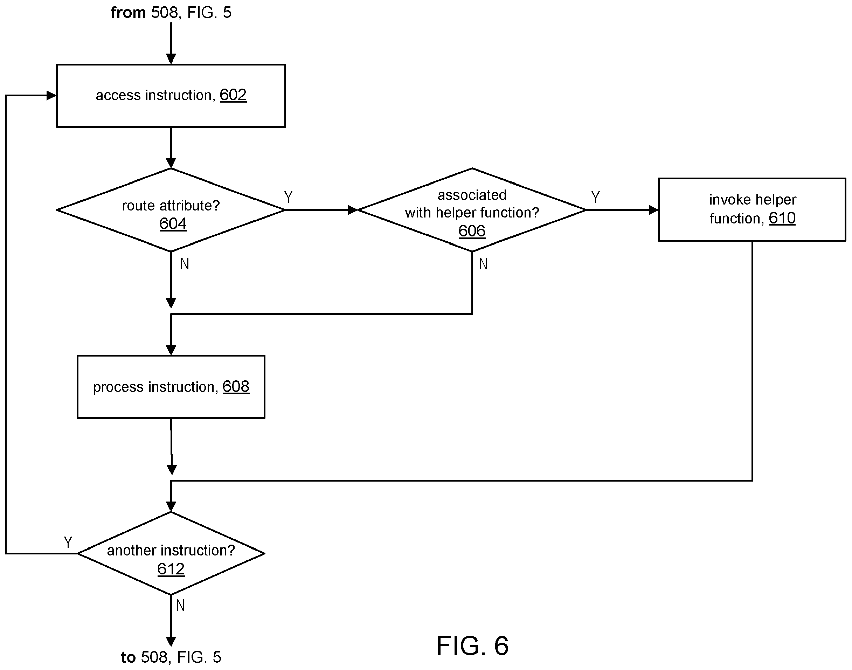

At operation 510, the policy engine can transfer execution to the policy function (e.g., MAIN(), FIG. 4) referenced at the point of application. In some embodiments, for example, the policy engine can invoke an RCF engine (e.g., 314a) to create an execution environment within which to begin executing the policy function referenced at the point of application, details of which are described in FIG. 6. Upon completion/termination of the RCF engine, processing can continue to decision point 512.

At decision point 512, if the policy directive does not produce a result, such as DROP the route, PERMIT the route, etc., then processing can proceed to operation 504 to continue processing the routing policy. Otherwise, processing of the route can be deemed complete.

Referring to FIG. 6, the discussion will now turn to a high-level description of processing in a network device (e.g., 200, FIG. 2) for processing an invoked policy function in accordance with the present disclosure. Entry to the flow in FIG. 6 can come from decision point 508 ('Y' branch) in FIG. 5.

At operation 602, an RCF engine (e.g., RCF engine 214a) executing on the network device can begin by accessing the first instruction in the policy function. In some embodiments where the compiled policy functions are represented by evaluation trees, the RCF engine can access the top (root) node of the evaluation tree to begin processing.

At decision point 604, if the accessed instruction references a route attribute, then processing can proceed to decision point 606. If the accessed instruction does not reference a route attribute, then processing can proceed to operation 608.

At decision point 606, when the accessed instruction references a route attribute, if the accessed instruction further references a helper function then processing can proceed to operation 610. If the accessed instruction does not reference a helper function then processing can proceed to operation 608 to process the route attribute.

At operation 608, the RCF engine can process the accessed instruction when the accessed instruction does not reference a route attribute, or the accessed instruction does reference a route attribute but does not reference a helper function. The RCF engine can process the accessed instruction accordingly. For instance, if the accessed instruction is an instruction to invoke another policy function (i.e., a function call), the policy function can be invoked and processed according to the flow in FIG. 6. The accessed instruction can be an instruction other than a function call (e.g., assignment statement), in which case the RCF engine can process the accessed instruction. Program execution can proceed to operation 612.

At operation 610, in response to the accessed instruction referencing a route attribute and a helper function, the RCF engine can invoke the helper function. Program execution can transfer from the policy function being processed to the helper function. Processing of the helper function can proceed according to the flow of FIG. 6. Depending on the nature of the helper function, the helper function can modify or otherwise manipulate the route attribute and/or perform operations on metadata (e.g., setting counters, flags, etc.), and so on. Instructions in the helper function can include function call and helper functions on other route attributes. Upon completion of the helper function, program execution can return to the policy function and proceed to operation 612.

At decision point 612, if there is another instruction in the policy function, processing can proceed to operation 602 to access the next instruction and repeat the flow of FIG. 6. Otherwise, processing of the policy function can be deemed completed, and execution of the routing policy can transfer back to the point of application to continue processing in the routing policy following the point of application (operation 508, FIG. 5).

The discussion will now turn to a description of helper functions for processing an AS path attribute. The AS path attribute is well understood. Briefly, when a router (e.g., a BGP router) advertises a route, the router inserts the AS number of the autonomous system that it belongs to into a list, called the AS path, that is advertised with the route. The route is advertised to the next router which adds (prepends) the AS number of its autonomous system to the AS path, and so on. The AS path is essentially a list of AS numbers (e.g., 32-bit values) that grows as the route is advertised among BGP routers.

Each AS number is associated with a segment type. There are four types of segments:
- AS sequence - This type of segment comprises a sequence of AS numbers which represents the autonomous systems that have been encountered. The order of AS numbers in an AS sequence is relevant and so must be maintained.
- AS set - This type of segment comprises a set of AS numbers of the autonomous systems that have been encountered. The order of AS numbers in an AS set is not relevant, and so the order need not be maintained.
- AS confederation (confed) sequence - This type of segment comprises a sequence of AS numbers of autonomous systems that belong to a confederation. The order of AS numbers in a confederation sequence is relevant and so must be maintained.
- AS confederation (confed) set - This type of segment comprises a set of AS numbers within a confederation. The order of AS numbers within a confederation set does not matter, and so the order need not be maintained.

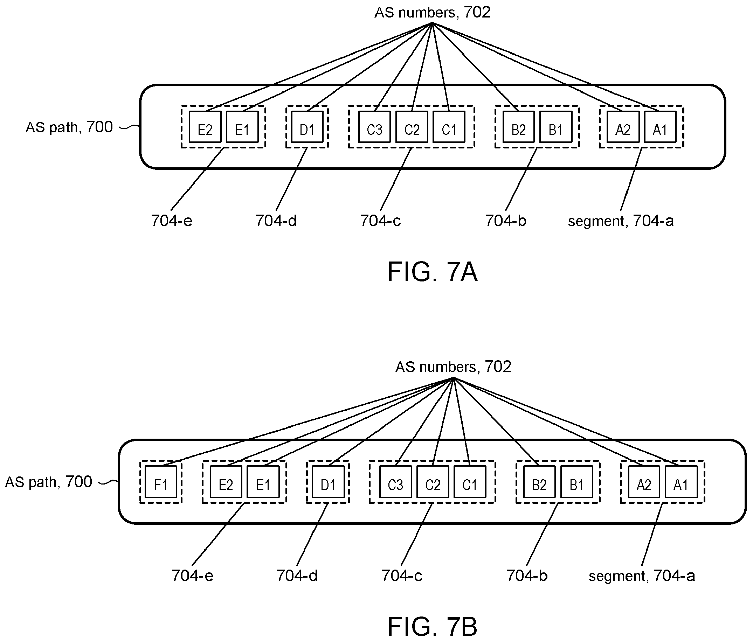

Referring to FIGs. 7A and 7B, an example of an AS path 700 comprising AS numbers 702 is illustrated. Contiguous groups of AS numbers of the same segment type are depicted as segments 704. Each segment 704 can be any one of the above segment types. For illustration purposes, each AS number is shown using a letter to indicate the segment to which it belongs. For example, segment 704-a comprises AS numbers A1 and A2, segment 704-b comprises AS numbers B1 and B2, and so on. A segment can comprise a single AS number; e.g., segment 704-d comprises the AS number D1.

In the convention used herein, the list is ordered in time from right to left, where the right-most end of the list is earliest in time; e.g., AS number A1 was added first, then A2, then B1, and so on. When an AS number is added to the AS path, the new AS number is prepended to the path; i.e., the new AS number is added to the left-most end of the list. This action is illustrated between FIG. 7A and FIG. 7B, showing a subsequent AS number, namely F1, having been added (prepended) to the AS path 700.

In accordance with the present disclosure, helper functions can be provided to manipulate an AS path thus obviating the need for the customer/user having to design, implement, and support such functionality. In some embodiments, for example, helper functions specific to AS path manipulation can include: a replace helper function, a remove helper function, and a normalize helper function.

### REPLACE Helper Function

In accordance with some embodiments, the _{REPLACE} helper function can replace AS numbers in an AS path with a replacement AS number (value). Using the dot operator, the calling syntax for the _{REPLACE} helper function can be:

```
                as_path.replace ( target, replacer, type] );
```

where
as_path is a global variable that holds an AS path,
target is (are) the AS numbers in as_path to be replaced,
replace is the replacement AS number (value), and
type is an optional qualifier that specifies the segment type of the target.

The target AS number(s) of the _{REPLACE} helper function can be individual AS numbers, ranges of AS numbers, specific segments. For example:

```
                     as_path.replace ( { 1, 2, 3 }, 10 );
```

can replace every occurrence of an AS number in the AS path that is specified in a target group with a replacement value, irrespective of its segment type. In the example above, the target AS numbers are 1, 2, 3 (which can be expressed as " {1,2,3 } "), and the replacement value is '10'.

It is understood that the _{REPLACE} helper function can be applied to a user-defined local variable that holds the AS path; for example:

```
                      local_path = as_path;
                      local_path.replace ( { 1, 2, 3 }, 10 );
```

can operate to manipulate the AS path stored in the local variable local_path, and not manipulate the AS path stored in the global variable as_path.

The target can be expressed as one or more ranges. For example:

```
               as_path.replace( { 21 to 30, 50 to 60 }, 10 );
```

can operate to replace AS numbers in the given ranges, namely 21 to 30 and 50 to 60, with the replacement value '10'. Target ranges can facilitate replacing private AS numbers that occur in the AS path. Private AS numbers fall in the range 64512 to 65534 for two-byte AS numbers and in the range 4200000000 to 4294967294 for four-byte AS numbers. The target range can cover the entire private AS number space, or certain private AS numbers or sub-ranges of private AS numbers.

The target can be qualified to replace only AS numbers of a certain segment type, as illustrated by the following example:

```
        as_path.replace( { 1, 2, 3-6 }, 10, type=confed_sequence);
```

This operation can replace AS numbers 1, 2, and 3-6 with the replacement value '10' if these AS numbers are of the "confederation sequence" segment type. This example further illustrates that the target can specify a range in conjunction with segment type.

### REMOVE Helper Function

In accordance with some embodiments, the _{REMOVE} helper function can remove specified AS numbers from an AS path. Using the dot operator, the calling syntax for the REMOVE helper function can be:

```
                      as_path.remove ( target[, type] );
```

where
as_path is a global variable that holds an AS path,
target is (are) the AS numbers in as_path to be removed, and
type is an optional qualifier that specifies the segment type of the target.
The target can specify individual AS numbers and/or ranges of AS numbers as described above. For example:

```
            as_path.remove( { 1, 2, 21 to 30, 50, 60 to 90 } );
```

can operate to remove occurrences of AS numbers 1, 2, 50 from as_path, and also AS numbers in the range 21 to 30 and 60 to 90.

The _{REMOVE} helper function can also be invoked on a user-defined local variable, for example:

```
                      local_path = as_path;
                      local_path.remove ( { 1, 2, 3 } );
```

The target AS numbers of the _{REMOVE} helper function can be qualified to remove only AS numbers of a specified segment type. For example:

```
               as_path.remove( { 1, 2, 3 }, type=confed_set );
```

can operate to remove AS numbers 1, 2, 3 from as_path, but only if these AS numbers are of the "confederation set" segment type.

### NORMALIZE Helper Function

In accordance with some embodiments, the NORMALIZE helper function can normalize the length of the AS path by either extending or truncating the AS path to a certain length or cost. This would allow the customer to assign the same best path cost to a set of paths. Using the dot operator, the calling syntax for the NORMALIZE helper function can be:

```
                as_path.normalize ( to_length, extend_with );
```

where
as_path is a global variable that holds an AS path,
to_length specifies the desired length of the AS path, and
extend_with specifies the AS number with which to extend/lengthen the AS path.

Operation of the NORMALIZE helper function can proceed as follows:
- If the length of the AS path exceeds to_length, then the helper function can truncate the AS path by removing AS numbers; for example, by removing AS numbers starting with AS numbers that are latest in time in the path.
- If the length of the AS path is less than to_length, then the helper function can prepend the extend_with value to the AS path as many times as needed to reach to_length.

The disclosure will now turn to a description for storing an AS path in accordance with the present disclosure. In some embodiments, the AS path can be stored in memory in a first representation (format) that is suitable for reading the AS path (read-only mode) such as for example during evaluation of policy directives that require reading from, but not writing to, the AS path.

The AS path can be stored in memory in a second representation (format) that is suitable for construction and manipulation of the AS path (read-write mode), for example, during RCF evaluation such as in a helper function for the AS path where the AS path can be written to.

In accordance with the present disclosure, an AS path can be copied between the first representation and the second representation. For read-only mode, the first representation can represent the AS path in a data structure that is suitable for long-term storage, where the structure is space efficient to reduce memory storage requirements but may be less efficient for access and modification. For read-write mode, the second representation can represent the AS path in a data structure that is more efficient for access and modification but at the expense of inefficient use of memory in order to achieve access efficiency. In some embodiments, the first representation and the second representation can be different regions of the same memory space. In other embodiments, the first representation can be a region of memory in one storage device and the second representation can be memory on another different storage device. The flow in accordance with some embodiments can proceed as follows:
- The network device can receive an AS path, for example in a BGP route from a BGP neighbor. The AS path can be initially stored in a first memory in accordance with a first (storage-efficient) representation. The received BGP route can be processed/assessed in accordance with a routing policy.
- The AS path path can be accessed from the first memory when evaluation of policy directives that only read the AS path (read-only mode). However, when a policy directive involves manipulating the AS path (read-write mode), the AS path can be copied to a second memory in accordance with a second (access-efficient) representation. For example, a policy directive that invokes a helper function for manipulating the AS path can be a trigger to cause the space-efficient representation of the AS path in the first memory to be copied and stored in an access-efficient representation in the second memory. Additional details are described below.
- When processing no longer involves writing to the AS path, the AS path can be stored in a space-efficient representation in a third memory. Continuing with the example above, completion of the helper function can be a trigger to cause the AS path in the second memory to be copied and stored in the third memory in space-efficient representation. Additional details are described below.
- The swapping between space-efficient and access-efficient representations can be repeated.

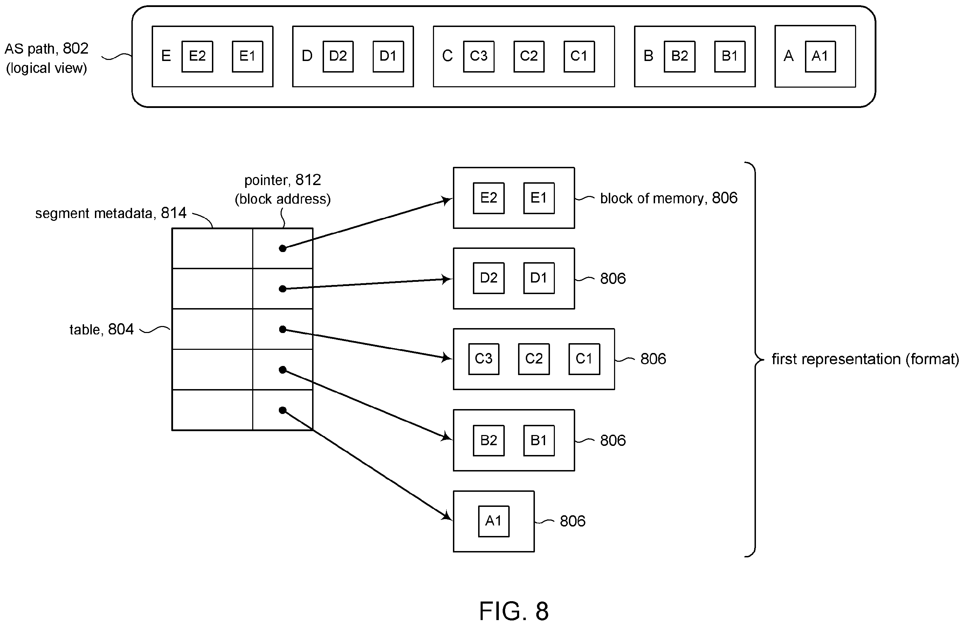

FIG. 8 illustrates an example of a first storage representation of an AS path in accordance with some embodiments. The figure shows the logical view of an AS path 802 comprising segments A - E. Each segment can be one of the above segment types, and comprises respective AS numbers. In accordance with the first storage representation, the AS path 802 can be stored in a data structure comprising a table 804 and blocks of memory 806. The table 804 comprises an entry for each segment A - E in the AS path. Each block of memory stores the AS numbers in a segment A - E. Each entry in table 804 comprises a pointer 812 and metadata 814. The pointer 812 stores the address (points to) of a block of memory 806, and the metadata 814 contains the segment type of the segment.

In accordance with the present disclosure, the block of memory that constitutes table 804 and memory blocks 806 can be allocated from available regions of memory, rather than requiring a contiguous block of memory to store the entire AS path. As memory is allocated and deallocated during the course of operation, "holes" which are small non-contiguous blocks of memory may develop. The first representation is storage-efficient in that the constituent data structures may be able to use up some of these holes rather than leaving them unallocated.

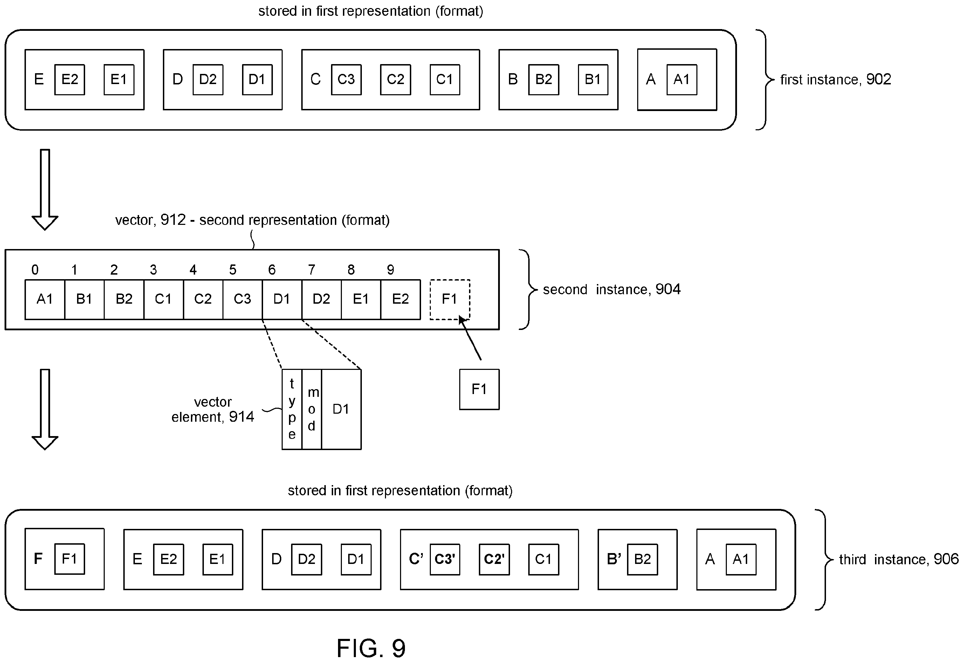

FIG. 9 illustrates the copying between the first representation of an AS path and the second representation of the AS path in accordance with some embodiments. An initial instance 902 of the AS path is shown stored in accordance with the first representation, such as shown in FIG. 8 for example.

A second instance 904 of the AS path is stored in accordance with the second representation; e.g., in preparation for manipulation of the AS path by an AS path helper function. In accordance with some embodiments, the second representation comprises a block of contiguous memory (vector) 912 of sufficient size to hold the entire AS path. Each element 914 in the vector 912 comprises an AS number and information on its segment type. The contiguous storage of AS numbers reduces access time to the AS numbers when manipulating the AS path, as for instance in an AS path helper function. By comparison, the multiple memory blocks configuration of the first representation can require separate memory accesses each time different segments in the AS path are accessed.

In some embodiments, the second representation (e.g., 904) of the AS path stores the constituent AS numbers in reverse order relative to the ordering of AS numbers in the first representation (e.g., 902). As noted above, when an AS number is added to the AS path, the number is prepended to the AS path. Referring to the example shown in FIG. 9 with reference to the first instance 902 of the AS path, AS number A1 was added first, then A2, then B2, and so on. With reference to the second instance 904, the AS numbers can be seen to be stored in reverse order relative to the AS numbers in the first instance. Prepending is a common operation on AS paths. The second representation allows helper functions to very cheaply add new AS numbers to the end of the vector when prepending, as compared to the first representation where prepending a new AS number would require shifting the existing AS numbers forward to make room for the new AS number. FIG. 9 shows the addition of an AS number (F1) to the end of vector 912, which effectively "prepends" the AS number to the AS path by virtue of the AS numbers in the vector being stored in reverse order.

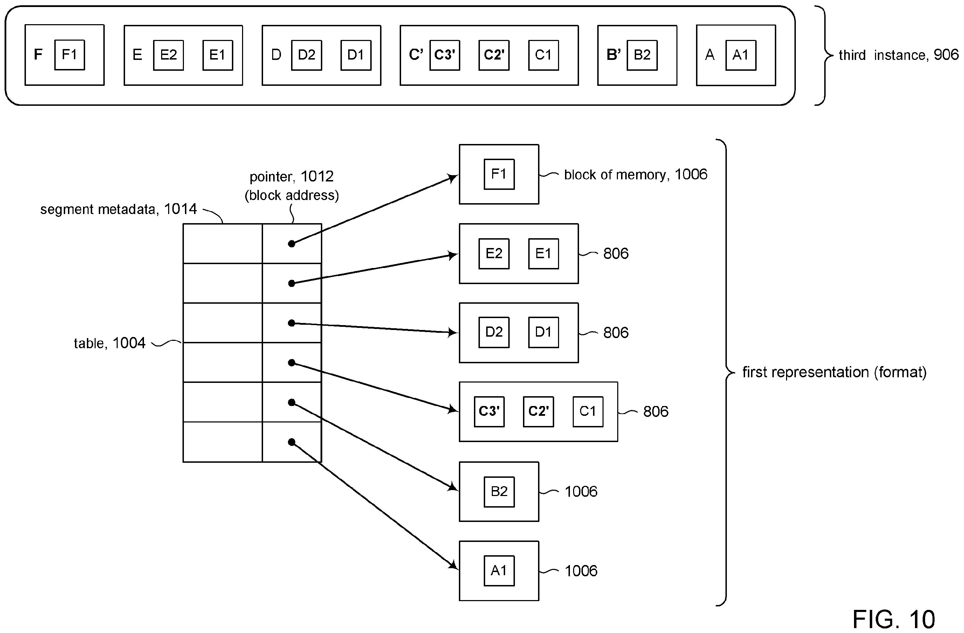

Suppose for discussion purposes that the following manipulations were made to the AS path (e.g., in a helper function): AS number F1 is added, AS numbers C3 and C2 were modified, AS number B1 was deleted. Referring to FIGs. 9 and 10, the first and second instances 902, 904 of the AS path can be copied into a third instance 906 in accordance with the first representation; e.g., in response to exiting the helper function. The third instance 906 of the AS path can be constructed as follows as shown in FIG. 10:
- A new table of pointers 1004 can be allocated to accommodate newly added segments and/or deleted segments.
- AS number F1 was added to the path. Accordingly, a memory block 1006 can be allocated of sufficient size to store the AS number. The new AS number is effectively "prepended" by being added to the first entry in table 1004. The address of the allocated memory block is stored in the pointer field 1012 of the entry, and the segment type of the AS number is added to the segment metadata field 1014 of the entry.
- AS numbers E2, E1, D2, and D2 were not modified. Accordingly, the original memory blocks (FIG. 8) that contain AS numbers E2 and E1, and D2 and D2 can be retained. The addresses of the original memory blocks are stored in the respective pointer fields 1012 of the next two entries, and likewise the segment types of the AS numbers are stored in the respective segment metadata fields 1014.
- AS numbers C3 and C2 were modified; no other manipulations were made on the segment that includes C2 and C3. In some embodiments, each vector element 914 can include a "modified" bit that can be set to logic '1' to indicate the AS number was manipulated (added, deleted, or otherwise modified). In this case, the original memory block (FIG. 8) that contains AS numbers C1, C2, C3 can be retained; the new values for C2 and C3 can be copied over and the original value of C1 retained. The address of the original memory block is stored in the pointer field 1012 of the next entry in table 1004, and the segment type of the AS number is added to the segment metadata field 1014 of the entry.
- AS number B1 has been deleted. Accordingly, a new memory block 1006 can be allocated of sufficient size to store the remaining AS number(s) in the segment that contains B1. The address of the new memory block is stored in the pointer field 1012 of the next entry in the table 1004, and the segment type of the AS number is added to the segment metadata field 1014 of the entry. The old memory block (FIG. 8) that previously stored AS numbers B1 and B2 can be deallocated.
- A1 was not modified. Accordingly, the original memory block (FIG. 8) that contains A1 can be retained. The address of the original memory block is stored in the pointer field 1012 of the next entry in table 1004, and likewise the segment type is stored in the segment metadata field 1014.

### Further Examples

Features described above as well as those claimed below may be combined in various ways without departing from the scope hereof. The following examples illustrate some possible, non-limiting combinations:
(A1) A method in a network device for processing a network route according to a routing policy, the method comprising: receiving the network route; executing at least one policy directive in the routing policy to derive a route evaluation for the network route, including: invoking a function at a point of application in the policy directive, wherein program execution transfers from executing the policy directive to executing program instructions in the function; invoking, at a point of invocation in the function, a helper function associated with an attribute of the network route to process the attribute, wherein program execution transfers from executing the program instructions in the function to executing program instructions in the helper function; performing one or more operations on the attribute in accordance with the program instructions in the helper function; returning program execution to the function upon completing execution of the helper function; returning program execution to a point in the routing policy following the point of application upon completing execution of the function; and performing an action on the network route based on the route evaluation, wherein the route evaluation is produced either in the helper function or in the function.
(A2) For the method denoted as (A1), the point of invocation of the helper function includes one or more arguments to the helper function, wherein the one or more arguments are used by the helper function.
(A3) The method denoted as any of (A1) through (A2), further comprising: receiving a routing policy specification; and compiling the routing policy specification to produce the routing policy for execution by the network device.
(A4) For the method denoted as any of (A1) through (A3), the routing policy specification includes source code for the function and source code for the helper function.
(A5) For the method denoted as any of (A1) through (A4), the routing policy specification is entered by a user at a command line interface.
(A6) For the method denoted as any of (A1) through (A5), the routing policy specification is in a file that is downloaded to the network device.
(A7) For the method denoted as any of (A1) through (A6), the attribute is an autonomous system (AS) path attribute of the network route.
(B1) A method in a network device for processing network routes, the method comprising: receiving a network route comprising an AS (autonomous system) path attribute; executing at least one policy directive in a routing policy to derive a route evaluation for the network route, including: invoking a function at a point of application in the policy directive, wherein program execution transfers from executing the policy directive to executing program instructions in the function; invoking, at a point of invocation in the function, a helper function associated with the AS patch attribute of the network route, wherein program execution transfers from executing the program instructions in the function to executing program instructions in the helper function, wherein the program instructions in the helper function include operations that modify a set of AS numbers in the AS path attribute of the network route; returning program execution to the function upon completing execution of the helper function; and returning program execution to a point in the routing policy following the point of application upon completing execution of the function; and performing an action on the network route based on the route evaluation, wherein the route evaluation is produced either in the helper function or in the function.
(B2) For the method denoted as (B1), the program instructions in the helper function include operations that replace one or more AS numbers in the set of AS numbers of the AS path attribute with a replacement AS number.
(B3) For the method denoted as any of (B1) through (B2), the program instructions in the helper function include operations that replace each AS number in the set of AS numbers of the AP path attribute that falls within a range of AS numbers with a replacement AS number.
(B4) For the method denoted as any of (B1) through (B3), the program instructions in the helper function include operations that replace each AS number of a specified type in the set of AS numbers of the AP path attribute with a replacement AS number.
(B5) For the method denoted as any of (B1) through (B4), the program instructions in the helper function removes a subset of AS numbers from the set of AS numbers of the AP path attribute.
(B6) For the method denoted as any of (B1) through (B5), the subset of AS numbers is expressed as a range of AS numbers.
(B7) For the method denoted as any of (B1) through (B6), the subset of AS numbers are AS numbers of a specific type.
(B8) For the method denoted as any of (B1) through (B7), the program instructions in the helper function include operations that normalize the set of AS numbers to a specified length, including truncating the set of AS numbers or extending the set of AS numbers of the AP path attribute.
(C1) A network device comprising: one or more computer processors; and a computer-readable storage device comprising instructions that control the one or more computer processors to: receive a routing policy specification comprising: at least a first policy directive that specifies a network route, the first policy directive comprising a function call to a first function; source code for the first function comprising a function call to a second function to evaluate and/or modify an attribute of the network route; and source code for the second function comprising instructions to evaluate and/or modify the attribute; evaluate and/or modify a network route according to the first policy directive, including invoking the first function followed by invoking the second function; and perform an action on the network route based on a route evaluation that is produced in the first function or the second function.
(C2) For the network device denoted as (C1), the function call to the second function is a dot operation expressed as:
   attr.function ([arg [, arg]]); where
   attr is a reference to the attribute associated with the network route,
   function is a reference to the second function, and
   [arg [, arg]] represents zero or more arguments to the second function.
(C3) For the network device denoted as any of (C1) through (C2), evaluating and/or modifying network routes according to the routing policy specification includes compiling the routing policy specification to produce a routing policy that is executable by the network device and evaluating and/or modifying the network routes.
(C4) For the network device denoted as any of (C1) through (C3), the routing policy specification is expressed in human-readable form, the routing policy is an executable representation of the route policy specification and is not in human-readable form.
(C5) For the network device denoted as any of (C1) through (C4), the attribute is an autonomous system (AS) path attribute of the network route.
(D1) A method in a network device for storing an AS path attribute in a network route, the method comprising: performing a first plurality of read operations on an AS path attribute, wherein the AS path attribute is stored in a first memory in accordance with a first representation of the AS path attribute, wherein performing the first plurality of read operations includes reading the first memory; performing a plurality of write operations on the AS path attribute subsequent to performing the first plurality of read operations, including: reading out one or more segments of the AS path attribute from the first memory and storing the one or more segments of the AS path attribute in a second memory in accordance with a second representation of the AS path attribute different from the first representation; and modifying one or more of the one or more segments of the AS path attribute stored in the second memory in accordance with the write operations; and performing a second plurality of read operations on an AS path attribute subsequent to performing the plurality of write operations, including: reading out segments of the AS path attribute from the first memory that were not modified by the write operations and storing the segments read from the first memory to a third memory in accordance with the first representation of the AS path attribute; reading out segments of the AS path attribute from the second memory that were modified by the write operations and storing the segments read from the second memory toe the third memory in accordance with the first representation of the AS path attribute; and performing the second plurality of read operations by reading the third memory.
(D2) For the method denoted as (D1), the first, second, and third memories are different regions in a same memory.
(D3) For the method denoted as any of (D1) through (D2), the first representation of the AS path attribute in the first memory comprises a first block of memory that stores memory addresses of a plurality of second blocks of memory, wherein each of the segments of the AS path attribute is stored in one of the second blocks of memory.
(D4) For the method denoted as any of (D1) through (D3), the first representation of the AS path attribute in the third memory comprises a third block of memory that stores memory addresses of one or more of the second blocks of memory of segments that were not modified and a plurality of fourth blocks of memory that store segments that were modified.
(D5) For the method denoted as any of (D1) through (D4), the second representation of the AS path attribute in the second memory comprises a block of contiguous memory, wherein the segments of the AS path attribute are stored in the block of contiguous memory.
(D6) For the method denoted as any of (D1) through (D5), the segments of the AS path are ordered, wherein the segments of the AS path attribute stored in the block of contiguous memory are stored in reverse order.
(D7) For the method denoted as any of (D1) through (D6), wherein the segments comprise AS numbers, wherein the AS numbers are stored in the block of contiguous memory.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents may be employed without departing from the scope of the disclosure as defined by the claims.

## Claims

1. A method in a network device for processing a network route according to a routing policy, the method comprising:
receiving the network route;
executing at least one policy directive in the routing policy to derive a route evaluation for the network route, including:
invoking a function at a point of application in the policy directive, wherein program execution transfers from executing the policy directive to executing program instructions in the function;
invoking, at a point of invocation in the function, a helper function associated with an attribute of the network route to process the attribute, wherein program execution transfers from executing the program instructions in the function to executing program instructions in the helper function;
performing one or more operations on the attribute in accordance with the program instructions in the helper function;
returning program execution to the function upon completing execution of the helper function;
returning program execution to a point in the routing policy following the point of application upon completing execution of the function; and
performing an action on the network route based on the route evaluation, wherein the route evaluation is produced either in the helper function or in the function.

2. The method of claim 1, wherein the point of invocation of the helper function includes one or more arguments to the helper function, wherein the one or more arguments are used by the helper function.

3. The method of claim 1 or claim 2, further comprising:
receiving a routing policy specification; and
compiling the routing policy specification to produce the routing policy for execution by the network device.

4. The method of claim 3, wherein the routing policy specification includes source code for the function and source code for the helper function.

5. The method of claim 3 or claim 4, wherein:
the routing policy specification is entered by a user at a command line interface; or
the routing policy specification is in a file that is downloaded to the network device.

6. The method of any preceding claim, wherein the attribute is an autonomous system (AS) path attribute of the network route.

7. A method in a network device for processing network routes, the method comprising:
receiving a network route comprising an AS (autonomous system) path attribute;
executing at least one policy directive in a routing policy to derive a route evaluation for the network route, including:
invoking a function at a point of application in the policy directive, wherein program execution transfers from executing the policy directive to executing program instructions in the function;
invoking, at a point of invocation in the function, a helper function associated with the AS patch attribute of the network route, wherein program execution transfers from executing the program instructions in the function to executing program instructions in the helper function, wherein the program instructions in the helper function include operations that modify a set of AS numbers in the AS path attribute of the network route;
returning program execution to the function upon completing execution of the helper function; and
returning program execution to a point in the routing policy following the point of application upon completing execution of the function; and
performing an action on the network route based on the route evaluation, wherein the route evaluation is produced either in the helper function or in the function.

8. The method of claim 7, wherein the program instructions in the helper function include operations that replace one or more AS numbers in the set of AS numbers of the AS path attribute with a replacement AS number.

9. The method of claim 7 or claim 8, wherein the program instructions in the helper function include operations that replace each AS number in the set of AS numbers of the AP path attribute that falls within a range of AS numbers with a replacement AS number.

10. The method of any of claims 7 to 9, wherein the program instructions in the helper function include operations that replace each AS number of a specified type in the set of AS numbers of the AP path attribute with a replacement AS number.

11. The method of any of claims 7 to 10, wherein the program instructions in the helper function removes a subset of AS numbers from the set of AS numbers of the AP path attribute.

12. The method of claim 11, wherein the subset of AS numbers is expressed as a range of AS numbers.

13. The method of claim 11 or claim 12, wherein the subset of AS numbers are AS numbers of a specific type.

14. The method of any of claims 7 to 13, wherein the program instructions in the helper function include operations that normalize the set of AS numbers to a specified length, including truncating the set of AS numbers or extending the set of AS numbers of the AP path attribute.

15. A network device comprising:
one or more computer processors; and
a computer-readable storage device having instructions which, when executed by the one or more processors, cause the one or more computer processors to perform a method as set out in at least one preceding claim.
